# EUROPEAN PATENT SPECIFICATION

(11) **EP 0 878 235 B1**
(45) Date of publication and mention of the grant of the patent: **02.11.2006**
(21) Application number: 98201205.6
(22) Date of filing: 15.04.1998
(51) Int. Cl.: B01J 37/02, B01J 23/44, C01B 15/023, B01J 23/62

(54) **Method of producing a catalyst by electroless deposition of the active metal on the support**
Verfahren zur Herstellung von Trägerkatalysatoren durch stromlose Metallabscheidung
Procédé de fabrication d'un catalyseur par depôt chimique du métal actif sur le support

(30) Priority: 05.05.1997 EP 97850074
(43) Date of publication of application: 18.11.1998
(73) Proprietor: Akzo Nobel N.V., 6800 SB Arnhem (NL); Eka Chemicals AB, 445 80 Bohus (SE)
(72) Inventor: Sellin, Annicka, 416 71 Göteborg (SE); Nyström, Mats, 442 52 Ytterby (SE)
(74) Representative: Jönsson, Christer

(56) References cited:
- EP-A- 0 009 802
- EP-A- 0 621 235
- GB-A- 718 306
- US-A- 4 061 598
- US-A- 4 374 047
- US-A- 5 435 985

## Description

The present invention relates to a method of producing a catalyst comprising a porous support and a catalytically active metal deposited thereon. The method involves electroless deposition of the active metal on the support. The invention also relates to a catalyst obtainable by the method and a process of producing hydrogen peroxide.

Catalysts made of a porous support and a catalytically active metal deposited thereon are used in numerous chemical processes. A porous support involves the advantage of achieving a high specific surface area and efficient utilisation of the active metal. Such a catalyst can, for example, be used for hydrogenation of alkylated anthraquinones in the anthraquinone process of producing hydrogen peroxide or for production of hydrogen peroxide by direct reaction between hydrogen and oxygen.

In the anthraquinone process of producing hydrogen peroxide alkylated anthraquinones dissolved in suitable organic solvents, a so called working solution, are treated with hydrogen in the presence of a catalyst to form the corresponding hydroquinones. The hydroquinones are then oxidised to quinones with oxygen (usually air) with simultaneous formation of hydrogen peroxide which is extracted with water while the quinones are returned with the working solution to the hydrogenation step.

The hydrogenation is the most important step in modem hydrogen peroxide production and different methods of performing this step efficiently are described in the literature. For example, US patent 3009782 discloses use of a fixed bed of catalyst particles, US patents 4552748 and 5063043 disclose use of a monolithic fixed bed catalyst, and US patent 5071634 discloses use of a catalyst coated static mixer.

In most cases the catalytically active metals are precious metals such as platinum or palladium. The catalysts are normally produced by impregnating a porous support with a solution of a salt of the metal and then treating the impregnated support with a reducing agent such as hydrogen gas. Such processes are described in, for example, US 4521531, US 4240933 and GB 933979. Although the efficiency of prior art catalysts normally is acceptable, there is always a demand for catalysts having improved activity. As chemical processes like hydrogen peroxide production are performed in large scale even a small enhancement of the catalyst activity can be crucial for the economy of the process.

Many metals can be deposited on various surfaces by electroless or autocatalytic deposition which is described in, for example, W. Goldie, "Metallic Coating of Plastic, Electrochemical Publications Ltd 1969, p 39-52, 55-58, 99-110; F. A. Lowenheim, "Modern Electroplating, John Wiliey & Sons, inc. 1974, p 710-711, 738-745; and J. L Vossen, W. Kern, "Thin Film Processes, Academic Press1978, p 212-221.

J. R. Kosak (DuPont), "A Novel Fixed Bed Catalyst for the Direct Combination of H₂ and O₂ to H₂O₂", Chem. Ind. (Dekker), 1995, Vol. 62 p 115-125. Catalysis of Organic Reactions, describes preparation of a catalyst by electroless deposition of palladium on a base metal support.

EP-A-0 009 802 discloses a palladium/silica hydrogenation catalyst which also comprises a small amount of a metal additive. The metal additive deposits on the silica support and serves as a base for the subsequently deposited palladium compound which is later reduced to palladium metal.

The present invention intends to solve the problem of providing an improved catalyst comprising a porous support and a catalytically active metal deposited thereon. It is also an object of the invention to provide an improved process of producing hydrogen peroxide. According to the invention it has surprisingly been found that the activity of a metal catalyst on a porous support is significantly increased if the catalytically active metal is deposited thereon by electroless deposition.

Electroless deposition refer to methods of depositing metals on catalytic surfaces by the action of a chemical reducing agent in a solution to reduce metallic ions to metal, i.e. autocatalytic deposition.

Thus, the invention concerns a method of producing a catalyst comprising a porous support and a catalytically active metal deposited thereon, characterised in that the method comprises the steps of activating the porous support to absorb a catalyst for electroless deposition, wherein the activation comprises the steps of first treating the porous support with a solution of a sensitizer capable of acting as a reductant and then with a solution of a salt of the catalyst for electroless deposition, and then treating the activated support with a solution of a salt of the catalytically active metal and a reducing agent to achieve electroless deposition of the catalytically active metal on the support. Thus, a salt of the catalytically active metal and a reducing agent appear in the same solution during the deposition.

The catalytically active metal may, for example, be any of nickel, palladium, platinum, rhodium, ruthenium, gold, silver, or mixtures thereof. Preferred metals are nickel, palladium, platinum and gold, of which palladium or mixtures comprising at least 50 wt% palladium are particularly preferred. Any water soluble salt of the catalytically active metal can be used. Examples of useful salts are chlorides and nitrates such as PdCl₂, (NH₃)₄PdCl₂, H₂PtCl₆ and Pd(NO₃)₂.

The porous support may be in the form of discrete particles or fiber cloth or, which is particularly preferred, be arranged in the form of a monolithic structure which, for example, may form substantially parallel channels coated with the support or a static mixer. A monolithic structure may be made of the porous support as such or of another material such as ceramic, metallic or polymeric materials or glass which has been coated with a porous support. Suitable materials for a porous support may, for example, be silica, silicate, alumina, carbon, aluminium silicate such as zeolite, carbonates of alkaline earth metals such as magnesium, calcium, barium or strontium, oxides of magnesium, aluminium, titanium or zirconium, or carbides of magnesium, silicon, aluminium, titanium or zirconium. Silica and alumina are particularly preferred. Preferably the support has a specific surface area from 0.3 to 500 m²/g, most preferably from 1 to 200 m²/g, particularly from 10 to 100 m²/g.

The reducing agent may, for example, be any of formic acid, formaldehyde, hydrazine, salts of hypophosphite or borohydride, or derivatives thereof, or a reducing gas such as hydrogen. Preferred reducing agents are salts of hypophosphite, particularly alkali metal salts such as sodium hypophosphite.

The solution of the salt of the catalytically active metal preferably also contains additional substances, such as stabilisers, particularly complexing agents such as ammoniac or derivatives thereof like ammonium chloride, EDTA, DTPA, or mixtures thereof, of which ammoniac and ammonium chloride are particularly preferred. It is advantageous if the solution contains a sufficient amount of stabilizers to avoid spontaneous precipitation of the catalytically active metal.

The treatment can be performed by contacting the porous support with a solution containing the salt of the catalytically active metal, the reducing agent and any other optional ingredients such as stabilisers, for example by immersing the support into the solution or pumping the solution through a body of a support for a time sufficient to achieve electroless deposition of a desired amount of the metal thereon which normally is from 0.1 to 10 g catalytically active metal per 100 g of the support. Normally a suitable contact time is from 30 seconds to 2 hours, preferably from 1 to 60 minutes. A longer contact time is not detrimental but does not involve any significant advantages. The temperature is not critical and may for example be from the freezing point to the boiling point of the solution, preferably from 5 to 70°C. The concentration of the solution is not critical and may, for instance, be from 0.0001 g catalytically active metal/litre solution up to saturation, for example up to 50 g metal/litre or more. The amount of reducing agent is suitably sufficient for precipitating substantially all the catalytically active metal onto the support. Preferably the reducing agent is added in stochiometric excess and the solution in contact with the support may, for instance, contain up to 100 g/litre or more of the reducing agent, although it is preferred to maintain a concentration below 50 g/litre for avoiding spontaneous precipitation of the catalytically active metal in the solution. It can be appropriate to arrange for good agitation, for example with a mechanical agitator, by providing forced circulation of the solution, or by blowing gas, e.g. nitrogen or another inert gas, through the solution which also involves the advantage of removing oxygen from the solution. It is possible to reuse the solution and just add make up amounts of the reducing agent and the salt of the catalytically active metal.

A preferred procedure involves the steps of first contacting the porous support with a solution containing the salt of the catalytically active metal, then adding the reducing agent to the solution and finally maintaining the support in contact with said solution for a time sufficient to achieve electroless deposition of a desired amount of the metal. Another preferred procedure involves the steps of first contacting the porous support with the reducing agent, preferably in an aqueous solution optionally containing one or more of the above mentioned additional substances such as stabilizers, then adding a solution containing the salt of the catalytically active metal, and finally maintaining the support in contact with said solution for a time sufficient to achieve electroless deposition of a desired amount of the metal. Still another preferred procedure involves the steps of contacting the porous support with a solution already containing both the salt of the catalytically active metal and the reducing agent, and finally maintaining the support in contact with said solution for a time sufficient to achieve electroless deposition of a desired amount of the metal.

The method of the invention further comprises the steps of activating the porous support to absorb a catalyst for electroless deposition, and then treating the activated support with a preferably aqueous solution of a salt of the catalytically active metal and a reducing agent to achieve electroless deposition of the catalytically active metal thereon. The activation is normally advisable if the support has no catalytic properties which is the case for most non-metals.

The catalyst for electroless deposition is normally a metal and may, for example, be any of aluminium, chromium, cobalt, gold, iron, molybdenum, nickel, palladium, platinum, rhodium, ruthenium, silver, steel, tin or tungsten, or mixtures thereof. Preferred catalysts for electroless deposition are palladium, platinum, gold or mixtures thereof, of which palladium is particularly preferred. It is also preferred to use the same metal or mixture of metals as the catalytically active metal to be deposited.

The activation comprises the steps of first treating the porous support with a, preferably aqueous, solution of a sensitizer capable of acting as a reductant and then with a preferably aqueous solution of a salt of the catalyst for electroless deposition to achieve formation of a thin layer of said catalyst on the support. Suitably these steps are carried out separately, and the treatment with the sensitizer is preferably followed by a washing or rinsing step, for example with water, before the sensitized support is contacted with the solution of the salt of the catalyst. The treatments can be performed with conventional methods such as immersion (preferably under agitation), pumping solution through a body of a porous support, spraying, etc. The concentration of the solutions is not critical. The solution of the sensitizer may, for instance, contain from 0.01 g/litre up to saturation, for example up to 100 g/litre or more, while the solution of the salt of the catalyst for electroless deposition may contain from 0.0001 g metal/litre up to saturation, for example up to 50 g/litre of more. Suitable treatment time for each step is preferably from 5 seconds to 60 minutes, most preferably from 1 to 10 minutes. A longer treatment time is not detrimental but does not involve any significant advantages. The temperature may, for example, be from the freezing point to the boiling point of the respective solution, preferably from 5 to 70°C. The same solution can be used several times after addition of make up chemicals.

Although it is possible to achieve activation without treatment with the sensitizer, it is then normally necessary to perform the electroless deposition at a higher temperature and it has also been found that the final catalyst obtained has a lower activity than those catalysts obtained in preparation methods including treatment with a sentisizer

If the catalyst for electroless deposition is the same metal or mixture of metals as the catalytically active metal finally deposited, it is possible to use the same solution in the activation as in the electroless deposition. For example, it is then possible to add the reducing agent to the activation solution while it still is in contact with the support.

The sensitizer can, for example, be stannous compounds, silver nitrate, titanium salts, hypophosphite salts or formaldehyde. Preferred sensitizers are stannous compounds such as chloride, fluoroborate, sulphate or stannite, of which stannous chloride is particularly preferred. The solution of the sensitizer preferably also contains an acid, most preferably hydrochloric acid.

Accordingly, a particularly preferred method of preparing a catalyst comprises the steps of:
(a) treating a porous support with a preferably aqueous solution of a sensitizer capable of acting as a reductant;
(b) washing the support from step (a), preferably with water;
(c) treating the support from step (b) with a preferably aqueous solution of a salt of a catalyst for electroless deposition to achieve formation of a thin layer of said catalyst;
(d) contacting the support from step (c) with a solution of a salt of a catalytically active metal preferably also containing one or more stabilisers such as ammoniac and/or ammonium chloride; and
(e) adding a reducing agent to the solution in step (d) to achieve electroless deposition of the catalytically active metal on the porous support, wherein the reducing agent preferably is added in excess to deposit substantially all the catalytically active metal onto the support.
Alternatively, steps (d) and (e) can be performed in the opposite order or simultaneously by contacting the support with a solution containing both a catalytically active metal and a reducing agent.

The invention also concerns a catalyst comprising a porous support and a catalytically active metal deposited thereon obtainable by electroless deposition of the active metal on the support according to the method described above. Compared to catalysts produced by conventional impregnation methods, catalysts according to invention show higher activity, especially for hydrogenation and particularly for hydrogenation of anthraquinones and derivatives thereof, but also for production of hydrogen peroxide by direct reaction between hydrogen and oxygen. It has also been found that the catalytically active metal in catalysts of the invention is not uniformly distributed throughout the porous support but is mainly localised to the outer surface thereof which might be one explanation of the unexpected high activity. Regarding further features of the catalyst, the above description of its preparation is referred to.

The invention also concerns a process of producing hydrogen peroxide according to the anthraquinone process involving alternate oxidation and hydrogenation of anthraquinones or derivatives thereof in a working solution of organic solvents in the presence of a catalyst according to the above description.

The hydrogenation is suitably performed at a temperature from 0 to 100°C, preferably from 40 to 70°C, and at a pressure from 10 to 1500 kPa, preferably from 200 to 600 kPa. Preferably alkylated anthraquinones such as 2-alkyl-9,10-anthraquinones are used. Examples of useful alkyl-anthraquinones are 2-ethylanthraquione, 2-tert-butylanthraquione, 2-hexenylanthraquione, eutectic mixtures of alkylanthraquiones, mixtures of 2-amylanthraquiones, and their tetrahydro derivatives. The working solution suitably comprises one or more quinone solvents and one or more hydroquinone solvents. Suitable quinone solvents may include aromatic, aliphatic or naphtenic hydrocarbons, for example benzene, alkylated or polyalkylated benzenes such as tert-butylbenzene or trimethyl benzene, alkylated toluene or naphthalene such as tert-butyltoluene or methylnaphthalene. Suitable hydroquinone solvents may include alkyl phosphates, alkyl phosphonates, nonyl alcohols, alkylcyclohexanol esters, N,N, dialkyl carbonamides, tetraalkyl ureas, N-alkyl-2-pyrrolidones. Particularly preferred hydroquinone solvents are described in the US patents 4800073 and 4800074 and include alkylsubstituted caprolactams and cyclic urea derivatives such as N,N'-dialkylsubstituted al-kylenurea.

The invention further concerns a process of producing hydrogen peroxide by direct reaction of hydrogen and oxygen in the presence of a catalyst according to the above description. The process is suitably carried out by continuously feeding hydrogen and oxygen in gas form to a pressurised reaction vessel containing a slurry of catalyst particles in a preferably aqueous reaction medium. The oxygen may be supplied as substantially pure gas or in the form of an oxygen containing gas such as air. The gas phase in the reactor suitably contains an excess of oxygen, for example from almost 0 to 25 mol%. The reaction is favoured by a high content of hydrogen, suitably above 0.1 mol%, preferably above 1 mol%, but for safety reasons it is preferred not to exceed the detonation limit at 19 mol% and most preferred not to exceed the explosion limit at 5 mol%. The reaction medium is suitably acidic and does preferably contain from 0.01 to about 1 moles/litre of free hydrogen ions, most preferably from 0.02 to 0.2 moles/litre of free hydrogen ions. The acid may for example be supplied in the form of sulfuric acid, phosphorous acid or perchloric acid which preferably is present in an amount from 0.01 to 1 mole/litre, most preferably from 0.02 to 0.2 moles/litre. Further, the reaction medium also suitably contains one or several halide ions such as bromide, chloride, or iodide, of which bromide being particularly preferred. The halogenide is preferably present in an amount from 1 to 1000 ppm by weight, most preferably from 2 to 100 ppm by weight, and may be supplied in the form of alkali metal salts such as sodium, potassium or mixtures thereof or as the corresponding acids. The pressure is suitably maintained from 10 to 200 bars, preferably from 30 to 100 bars, while the temperature suitably is maintained from 0 to 100°C, preferably from 20 to 70°C. In order to achieve sufficient mass transport it is preferred that the reaction medium is agitated or pumped around, or that the gas is injected in the bottom of the reaction vessel. The hydrogen peroxide formed dissolves in the reaction medium which continuously is withdrawn from the reaction vessel through a filter on which the catalyst is retained. The hydrogen peroxide can be separated from the reaction medium with conventional unit operations such as evaporation, distillation or combinations thereof. The reaction medium can then be recycled to the reaction vessel, optionally after addition of make up chemicals such as sulfuric acid, alkali metal bromide etc.

Regarding suitable and preferred catalysts, the above description of the catalyst and the method of its preparation is referred to.

Further details regarding hydrogen peroxide production as such appear in the patents cited herein, particularly US 4552748 and US 4800074.

The invention is further described through the following example. If nothing else is stated, all contents and percentages are based on the weight.

EXAMPLE: A catalyst according to the invention was prepared by deposition palladium on a monolithic porous silica support comprising channels with a total volume of 0.1 litre as described below.

The following aqueous solutions were prepared:
(a) 4.67 g HCl, 95.43 g water and 1,192 g SnCl₂ * 2 H₂O (s) were mixed.
(b) 3,75 ml acidic aqueous PdCl₂ solution (7 g Pd/l), 0.4 g HCl and water to a volume of 100 ml were mixed.
(c) 18.85 g NH₃ and 6.76 g NH₄Cl (s) were dissolved in 121.26 g water. This solution was mixed with an acidic aqueous solution of PdCl₂ (7 g Pd/I) and the resulting solution was allowed to stand overnight.
(d) 3.08 g NaH₂PO₂ * 2H₂O and 44.7 g water were mixed. Then the following steps were performed:

(1) Sensitizing: The monolithic support was immersed in solution (a) for 2 minutes and was then washed with 4 x 250 ml water.
(2) Activation: The sensitized support was immersed in solution (b) for 2 minutes.
(3) Electroless deposition: The activated support was immersed in solution (c), whereupon solution (d) was added slowly. After 45 minutes the support, which had become black, was taken out and was washed in an acidic aqueous solution for 10 minutes. Then it was allowed to dry in 50°C over night.
The prepared catalyst was used for hydrogenation of alkyl anthraquinone and the activity was measured and compared with a Reference catalyst prepared by impregnating the support with a palladium salt followed by reduction in hydrogen atmosphere. The results are shown in the table below.

| Age (days) | Activity (%) | |
|---|---|---|
| | Reference | Invention |
| 1 | 100 | 122 |
| 2 | 100 | 125 |
| 5 | 100 | 126 |
| 8 | 100 | 133 |
| 9 | 100 | 131 |
| 14 | 100 | 132 |
| 16 | 100 | 135 |

It appears that the catalyst of the invention has significantly higher activity than the Reference catalyst, both as new and after 16 days of operation.

## Claims

1. Method of producing a catalyst comprising a porous support and a catalytically active metal deposited thereon, **characterised in that** the method comprises the steps of activating the porous support to absorb a catalyst for electroless deposition, wherein the activation comprises the steps of first treating the porous support with a solution of a sensitizer capable of acting as a reductant and then with a solution of a salt of the catalyst for electroless deposition, and then treating the activated support with a solution of a salt of the catalytically active metal and a reducing agent to achieve electroless deposition of the catalytically active metal on the support.

2. Method as claimed in claim 1, **characterised in that** the catalytically active metal is palladium or a mixture comprising at least 50 wt% palladium.

3. Method as claimed in any one of the claims 1-2 **characterised in that** the solution of the salt of the catalytically active metal further contains ammonium chloride or ammoniac or a mixture thereof.

4. Method as claimed in any one of the claims 1-3, **characterised in that** the reducing agent is an alkali metal hypophosphite.

5. Method as claimed in any one of the claims 1-4, **characterised in that** the sensitizer is a stannous compound.

6. Method as claimed in any one of the claims 1-5, **characterised in that** the porous support is made of silica, silicate, alumina, carbon, carbonates of alkaline earth metals such as magnesium, calcium, barium or strontium, oxides of magnesium, aluminium, titanium or zirconium, or carbides of magnesium, silicon, aluminium, titanium or zirconium

7. Method as claimed in any one of the claims 1-6 **characterised in that** the porous support is arranged in the form of a monolithic structure.

8. Method as claimed in any on of the claims 1-7, **characterised in that** the treatment with the solution of the sensitizer is followed by a washing or rinsing step before the support is contacted with the solution of the salt of the catalyst for electroless deposition.

9. Catalyst comprising a porous support and a catalytically active metal deposited thereon and mainly localised to the outer surface thereof, which catalyst is obtainable by electroless deposition of the active metal on the support according to any one of the claims 1-8.

10. A process of producing hydrogen peroxide according to the anthraquinone process involving alternate oxidation and hydrogenation of anthraquinones or derivatives thereof in a working solution of organic solvents in the presence of a catalyst, **characterised in that** the hydrogenation takes place in the presence of a catalyst comprising a porous support and a catalytically active metal deposited thereon obtainable by electroless deposition of the active metal on the support according to any one of the claims 1-8.

11. A process of producing hydrogen peroxide by direct reaction of hydrogen and oxygen, **characterised in that** the reaction takes place in the presence of a catalyst comprising a porous support and a catalytically active metal deposited thereon obtainable by electroless deposition of the active metal on the support according to any one of the claims 1-8.

## Patentansprüche

1. Verfahren zur Herstellung eines Katalysators, der einen porösen Träger und ein darauf abgeschiedenes katalytisch aktives Metall umfasst, **dadurch gekennzeichnet, dass** das Verfahren die Schritte umfasst Aktivieren des porösen Trägers, um einen Katalysator für stromlose Abscheidung zu absorbieren, wobei das Aktivieren die Schritte umfasst erst Behandeln des porösen Trägers mit einer Lösung eines Sensibilisators, der als Reduktionsmittel wirken kann, und dann mit einer Lösung eines Salzes des Katalysators für stromlose Abscheidung, und dann Behandeln des aktivierten Trägers mit einer Lösung eines Salzes des katalytisch aktiven Metalls und einem Reduktionsmittel, um stromlose Abscheidung des katalytisch aktiven Metalls auf dem Träger zu erreichen.

2. Verfahren gemäß Anspruch 1, **dadurch gekennzeichnet, dass** das katalytisch aktive Metall Palladium oder ein Gemisch, umfassend mindestens 50 Gew.-% Palladium, ist.

3. Verfahren gemäß einem der Ansprüche 1 bis 2, **dadurch gekennzeichnet, dass** die Lösung des Salzes des katalytisch aktiven Metalls weiterhin Ammoniumchlorid oder Ammoniak oder ein Gemisch davon enthält.

4. Verfahren gemäß einem der Ansprüche 1 bis 3, **dadurch gekennzeichnet, dass** das Reduktionsmittel ein Alkalimetallhypophosphit ist.

5. Verfahren gemäß einem der Ansprüche 1 bis 4, **dadurch gekennzeichnet, dass** der Sensibilisator eine Zinn(II)-Verbindung ist.

6. Verfahren gemäß einem der Ansprüche 1 bis 5, **dadurch gekennzeichnet, dass** der poröse Träger aus Siliciumdioxid, Silicat, Aluminiumoxid, Kohlenstoff, Carbonaten von Erdalkalimetallen, wie Magnesium, Calcium, Barium oder Strontium, Oxiden von Magnesium, Aluminium, Titan oder Zirkonium, oder Carbiden von Magnesium, Silicium, Aluminium, Titan oder Zirkonium ist.

7. Verfahren gemäß einem der Ansprüche 1 bis 6, **dadurch gekennzeichnet, dass** der poröse Träger in Form einer monolithischen Struktur angeordnet ist.

8. Verfahren gemäß einem der Ansprüche 1 bis 7, **dadurch gekennzeichnet, dass** die Behandlung mit der Lösung des Sensibilisators gefolgt wird von einem Wasch- oder Spülschritt, bevor der Träger mit der Lösung des Salzes des Katalysators für stromlose Abscheidung kontaktiert wird.

9. Katalysator, umfassend einen porösen Träger und ein darauf abgeschiedenes katalytisch aktives Metall, welches hauptsächlich auf der äußeren Oberfläche davon lokalisiert ist, wobei der Katalysator erhältlich ist durch stromlose Abscheidung des aktiven Metalls auf dem Träger nach einem der Ansprüche 1 bis 8.

10. Verfahren zur Herstellung von Wasserstoffperoxid nach dem Anthrachinonverfahren, welches alternierende Oxidation und Hydrierung von Anthrachinonen oder Derivaten davon in einer Arbeitslösung von organischen Lösungsmitteln in Gegenwart eines Katalysators beinhaltet, **dadurch gekennzeichnet, dass** die Hydrierung in Gegenwart eines Katalysators stattfindet, der einen porösen Träger und ein darauf abgeschiedenes katalytisch aktives Metall umfasst, der durch stromlose Abscheidung des aktiven Metalls auf dem Träger nach einem der Ansprüche 1 bis 8 erhältlich ist.

11. Verfahren zur Herstellung von Wasserstoffperoxid durch direkte Reaktion von Wasserstoff und Sauerstoff, **dadurch gekennzeichnet, dass** die Reaktion in Gegenwart eines Katalysators stattfindet, der einen porösen Träger und ein darauf abgeschiedenes katalytisch aktives Metall umfasst, der durch stromlose Abscheidung des aktiven Metalls auf dem Katalysator nach einem der Ansprüche 1 bis 8 erhältlich ist.

## Revendications

1. Procédé de préparation d'un catalyseur comprenant un support poreux et un métal à activité catalytique déposé sur celui-ci, **caractérisé en ce que** le procédé comprend les étapes d'activation du support poreux pour l'absorption d'un catalyseur pour dépôt non électrolytique, l'activation comprenant les étapes d'abord de traitement du support poreux par une solution d'un sensibilisateur capable de jouer le rôle d'un réducteur, puis par une solution d'un sel du catalyseur pour dépôt non électrolytique, et ensuite de traitement du support activé par une solution d'un sel du métal à activité catalytique et d'un réducteur pour effectuer le dépôt non électrolytique du métal à activité catalytique sur le support.

2. Procédé selon la revendication 1, **caractérisé en ce que** le métal à activité catalytique est le palladium ou un mélange comprenant au moins 50 % en poids de palladium.

3. Procédé selon la revendication 1 ou 2, **caractérisé en ce que** la solution du sel du métal à activité catalytique contient en outre du chlorure d'ammonium ou de l'ammoniac ou un mélange de ceux-ci.

4. Procédé selon l'une quelconque des revendications 1 à 3, **caractérisé en ce que** le réducteur est un hypophosphite de métal alcalin.

5. Procédé selon l'une quelconque des revendications 1 à 4, **caractérisé en ce que** le sensibilisateur est un composé stanneux.

6. Procédé selon l'une quelconque des revendications 1 à 5, **caractérisé en ce que** le support poreux est constitué de silice, de silicate, d'alumine, de charbon, de carbonates de métaux alcalino-terreux tels que le magnésium, le calcium, le baryum ou le strontium, d'oxydes de magnésium, aluminium, titane ou zirconium, ou de carbures de magnésium, silicium, aluminium, titane ou zirconium.

7. Procédé selon l'une quelconque des revendications 1 à 6, **caractérisé en ce que** le support poreux se trouve sous la forme d'une structure monolithique.

8. Procédé selon l'une quelconque des revendications 1 à 7, **caractérisé en ce que** le traitement par la solution du sensibilisateur est suivi d'une étape de lavage ou de rinçage avant la mise en contact du support avec la solution du sel du catalyseur pour dépôt non électrolytique.

9. Catalyseur comprenant un support poreux et un métal à activité catalytique déposé sur celui-ci et localisé principalement à sa surface externe, lequel catalyseur peut être obtenu par dépôt non électrolytique du métal actif sur le support selon l'une quelconque des revendications 1 à 8.

10. Procédé de production de peroxyde d'hydrogène selon le processus à l'anthraquinone comprenant l'oxydation et l'hydrogénation alternées d'anthraquinones ou de leurs dérivés dans une solution de travail dans des solvants organiques en présence d'un catalyseur, **caractérisé en ce que** l'hydrogénation a lieu en présence d'un catalyseur comprenant un support poreux et un métal à activité catalytique déposé sur celui-ci, pouvant être obtenu par dépôt non électrolytique du métal actif sur le support selon l'une quelconque des revendications 1 à 8.

11. Procédé de production de peroxyde d'hydrogène par réaction directe d'hydrogène et d'oxygène, **caractérisé en ce que** la réaction a lieu en présence d'un catalyseur comprenant un support poreux et un métal à activité catalytique déposé sur celui-ci, pouvant être obtenu par dépôt non électrolytique du métal actif sur le support selon l'une quelconque des revendications 1 à 8.
